# EUROPÄISCHE PATENTSCHRIFT

(11) **EP 0 826 264 B1**
(45) Veröffentlichungstag und Bekanntmachung des Hinweises auf die Patenterteilung: **04.08.1999**
(21) Anmeldenummer: 96913456.8
(22) Anmeldetag: 02.05.1996
(51) Int. Cl.: H02K 9/06, F04D 25/02, F16D 43/18

(54) **ELEKTRISCHER ANTRIEB FÜR SCHIENENFAHRZEUGE UND SPURGEBUNDENE FAHRZEUGE**
ELECTRIC DRIVE SYSTEM FOR RAILWAY VEHICLES AND GUIDED VEHICLES
SYSTEME D'ENTRAINEMENT ELECTRIQUE POUR VEHICULES SUR RAILS ET VEHICULES GUIDES

(30) Priorität: 16.05.1995 DE 19517959
(43) Veröffentlichungstag der Anmeldung: 04.03.1998
(73) Patentinhaber: SIEMENS AKTIENGESELLSCHAFT, 80333 München (DE)
(72) Erfinder: PFANNSCHMIDT, Bernd, D-90574 Rosstal (DE)
(86) Internationale Anmeldenummer: DE9600763
(87) Internationale Veröffentlichungsnummer: WO9637033

(56) Entgegenhaltungen:
- EP-A- 0 012 693
- US-A- 4 512 452

## Beschreibung

Die Erfindung betrifft einen elektrischen Antrieb für Schienenfahrzeuge und spurgebundene Fahrzeuge, mit einem Elektromotor und wenigstens einem auf der Motorwelle frei drehbar gelagerten Lüfterrad.

Elektromotoren für schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten.Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außen-Kühlkanäle saugt oder drückt.

Um von der Umgebungsluft und der Luftfördermenge des Motors unabhängig zu sein, wurden auch schon aufwendige Fremdkühlsysteme vorgeschlagen, die entweder auf der Basis einer Fremdbelüftung mit Luftführung und eigenem Gebläsemotor oder auf der Basis einer Wasserkühlung arbeiten. Diese Kühlsysteme und ihre Steuerungen sind sehr aufwendig.

Um das durch einen Ventilator mit zunehmender Rotationsgeschwindigkeit ansteigende Motorengeräusch zu reduzieren, ist aus der CH-A-664 242 ein Kühlluftventilator für eine drehende elektrische Maschine bekannt, mit einem an einem Joch befestigten Stator und einem auf einer drehbar auf dem Joch gestützten Welle befestigten Rotor, wobei der Kühlluftventilator drehbar mittels eines Lagers auf der Welle angeordnet ist. Eine Mehrzahl von Magnetpaaren sind auf dem Rotor oder dem Ventilator befestigt. Eine nicht eisenhaltige Scheibe ist am Ventilator oder dem Rotor befestigt und weist einen ringförmigen, zwischen den Magnetpaaren angeordneten Flansch auf. Der Ventilator wird durch die Wechselwirkung zwischen den Magneten und im Scheibenflansch induzierten Wirbelströmen angetrieben. Es tritt ein als Funktion der Geschwindigkeit ansteigender Schlupf auf, wobei der durch den Ventilator bewirkte Geräuschpegel reduziert wird. Bei hohen Motordrehzahlen kann es bei ausreichender Fahrtwindkühlung wünschenswert sein, daß die Mitnahmewirkung der Kupplung bis zur Wirkungslosigkeit aufhebbar ist. Dies läßt sich mit der bekannten Magnetkupplung nicht erreichen.

Es wurde gefunden, daß bei der eingangs beschriebenen Motorkühlung mittels eines fest auf der Motorwelle sitzenden Lüfterrades die Kühlluftmenge in hohem Maße drehzahlproportional zur jeweiligen Motordrehzahl ist, wodurch in der Regel im Bereich hoher Drehzahlen eine zur Kühlung nicht erforderliche große Kühlluftmenge entsteht, die einen hohen Energieverbrauch und erhebliche Störgeräusche verursacht. Der hohe Energieaufwand trägt seinerseits wieder zu einer unnötigen Erwärmung des Antriebsmotors bei.

Aufgabe der Erfindung ist es, einen elektrischen Antrieb für Schienenfahrzeuge und spurgebundene Fahrzeuge bezüglich der Kühlung des Antriebsmotors zu verbessern.

Erfindungsgemäß wird diese Aufgabe dadurch gelöst, daß eine von der Motordrehzahl und der Fliehkraft abhängige Schlupfkupplung zwischen der Motorwelle und dem Lüfterrad vorgesehen ist, wobei ab einer vorgebbaren Motordrehzahl die Wirkung der Schlupfkupplung bis zur Aufhebung der Kraftübertragung reduzierbar ist und wobei bei abfallender Motordrehzahl die Kraftübertragung der Schlupfkupplung wieder zunimmt. Damit wird erreicht, daß die Kühlluftmenge bei niedrigeren Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt bzw. bei hoher Motordrehzahl und dabei ausreichender Fahrtluftkühlung durch Aufhebung der Mitnahmewirkung nicht mehr zunimmt.

Eine vorteilhafte Ausgestaltung der Erfindung besteht darin, daß die Schlupfkupplung eine auf der Motorwelle fest sitzende Scheibe aus magnetisierbarem Material, insbesondere Metall, umfaßt. Ferner ist am Lüfterrad wenigstens ein Permanentmagnet angeordnet und dieser der Metallscheibe unter Bildung eines Luftspaltes zugewandt. Die Erfindung schafft eine von der Motordrehzahl in ihrer Wirkung abhängige magnetische Schlupfkupplung, derart, daß die Mitnahmewirkung der Schlupfkupplung mit steigender Drehzahl der Motorwelle bis zur Wirkungslosigkeit aufhebbar ist und bei abfallender Motordrehzahl wieder bis auf die volle Mitnahmewirkung zunimmt.

Dabei wird eine an den Fahrbetrieb angepaßte Motorkühlung erreicht, ohne daß auf die bekannte Fremdbelüftung oder Wasserkühlung zurückgegriffen werden muß und ohne einen großen technischen Bauaufwand bzw. die Notwendigkeit, spezielle und teuere Schalt- und Überwachungsgeräte einzusetzen. Ferner kann der elektrische Antrieb mit einfacher und robuster Eigenbelüftung ausgeführt werden.

In vorteilhafter Ausführung kann gemäß der Erfindung die Drehzahlproportionalität der Kühlluftmenge nur bis zu einer für die Kühlungsanforderungen ausreichenden Drehzahl beibehalten und ab dieser Motordrehzahl das Lüfterrad mit geringerer Drehzahl angetrieben werden, so daß der Energieverbrauch und die Geräusche des Gebläses deutlich reduzierbar sind.

Nach der Erfindung wird das zur Motorkühlung vorgesehene Lüfterrad durch die Permanentmagnete von der auf der Motorwelle sitzenden Metallscheibe mitgenommen. Vorzugsweise sitzen diese Magnete an der Rückseite des Lüfters auf Trägersegmenten, derart, daß eine berührungsfreie Mitnahme des Lüfterrades gegenüber der Metallscheibe erfolgt. Die Trägersegmente sind so elastisch oder gelenkig am Lüfterrad befestigt bzw. gelagert, daß bei steigender Drehzahl des Lüfterrades die Trägersegmente mit ihren Magneten aufgrund der Fliehkraft nach außen bewegbar sind, so daß wegen des sich vergrößernden Luftspaltes zwischen den Magneten und der Metallscheibe die Mitnahmewirkung für das Lüfterrad geschwächt wird bzw. ganz aufgehoben werden kann. Vorteilhaft dabei ist neben der verschleißfreien Kraftübertragung, daß diese, wie gewünscht, bei abnehmender Motordrehzahl wieder automatisch einsetzt und sich zunehmend wieder verstärkt.

Die vorgesehene Schlupfkupplung kann nach einer abgewandelten Ausführung auch so ausgelegt sein, daß sie anstelle von permanentmagneten mit Elektromagneten und einer magnetisierbaren Metallscheibe arbeitet.

Nach einer weiteren Ausführung der Erfindung ist vorgesehen, daß die Motorwelle wenigstens einen fest sitzenden Permanentmagneten trägt, dem ein magnetisierbares Metallteil des Lüfterrades mit Abstand zugewandt ist, wobei dieses Metallteil gelenkig oder elastisch am Lüfterrad derart befestigt ist, daß dieser Abstand unter der Einwirkung der Fliehkraft veränderbar ist.

Weitere vorteilhafte Ausgestaltungen der Erfindung sind in den Patentansprüchen angegeben.

Die Erfindung wird im folgenden an Ausführungsbeispielen unter Hinweis auf die Zeichnung erläutert. Es zeigen:

Figur 1 einen Teilschnitt durch einen erfindungsgemäßen Antrieb, wie er insbesondere für mit hohen Drehzahlen betreibbare Bahnmotoren od.dgl. geeignet ist,

Figur 2 eine Draufsicht auf die mit einem Lüfterrad und einer magnetischen Schlupfkupplung versehene Antriebswelle eines erfindungsgemäßen elektrischen Antriebes.

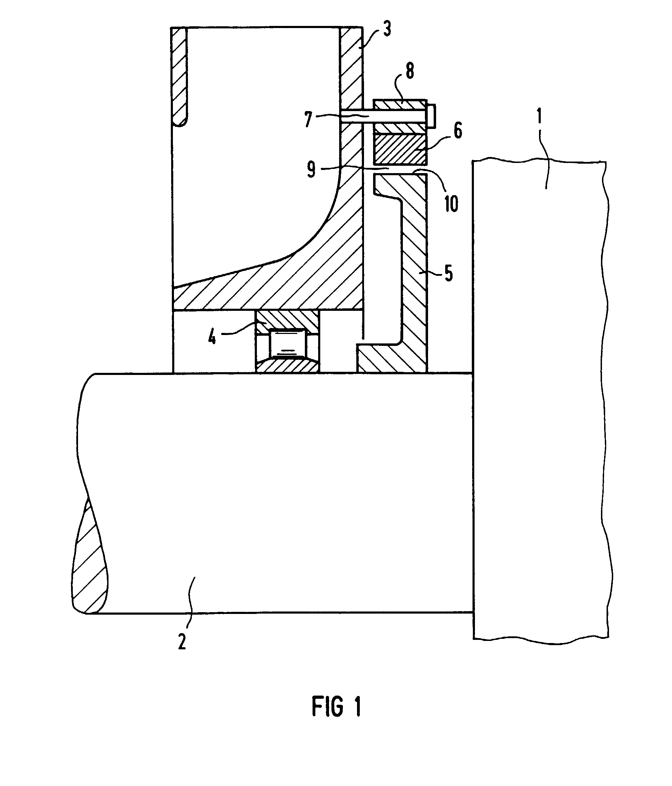

Zur Luftkühlung eines an sich bekannten Elektromotors 1 ist auf dessen Motorwelle 2 ein Lüfterrad 3 angeordnet, so daß dies über ein Lager 4 frei drehbar auf der Motorwelle sitzt. Im Ausführungsbeispiel nach Figur 1 ist zwischen dem Lüfterrad 3 und dem Motor 1 auf der Motorwelle 2 fest sitzend eine Scheibe 5 aus magnetisierbarem Material, insbesondere eine Metallscheibe, vorgesehen. Das Lüfterrad 3 ist auf der der Metallscheibe zugewandten Seite mit wenigstens einem Magneten 6, insbesondere Permanentmagneten, bestückt, so daß zwischen dem Magneten 6 und insbesondere dem Außendurchmesser 10 der Metallscheibe 5 ein Luftspalt 9 besteht.

Bei der erfindungsgemäßen Ausführung ist vorgesehen, daß das Lüfterrad 3 wenigstens einen Mitnehmer 7 mit einem Tragelement 8 für den oder die Permanentmagnete 6 oder auch Elektromagnete aufweist und wobei über den Mitnehmer oder das Tragelement der Abstand oder Luftspalt 9 der Magnete von der Metallscheibe 5 unter der Einwirkung der Fliehkraft veränderbar ist. Beim Ausführungsbeispiel können die Trägersegmente 8 für die Magneten 6 auf Mitnehmern 7 angeordnet sein, die zwar fest mit dem Lüfterrad 3 verbunden sind, aber andererseits unter der Einwirkung der Fliehkraft elastisch auslenkbar bzw. auch wieder in die Ausgangslage zurückstellbar sind.

Zur Motorkühlung ist damit eine magnetische Schlupfkupplung zwischen der Motorwelle 2 und dem Lüfterrad 3 geschaffen, die eine magnetische Drehzahlbegrenzung und -regelung für das Kühlluftgebläse bei elektrischen Antrieben für Schienenfahrzeuge bildet. Diese im Ausführungsbeispiel als magnetische Schlupfkupplung 4-10 ausgelegte Einrichtung wirkt in der Weise, daß mit steigender Motordrehzahl, insbesondere ab einen bestimmten Drehzahlbereich, über die Schlupfkupplung die Antriebswirkung auf das Lüfterrad abnimmt. Andererseits bewirkt die Schlupfkupplung bei einer unter einen bestimmten Drehzahlbereich abfallenden Motordrehzahl, daß die Antriebswirkung der Kupplung auf das Lüfterrad automatisch wieder zunimmt.

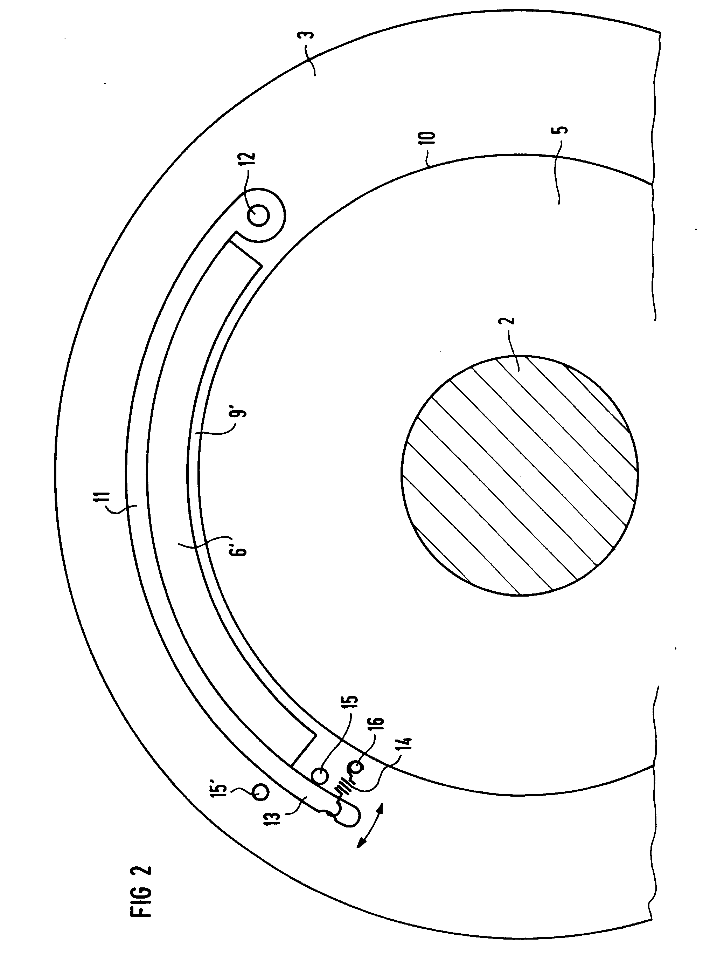

Beim Ausführungsbeispiel nach Figur 2 ist in Draufsicht die Motorwelle 2, die fest darauf sitzende Metallscheibe 5 und dahinter das Lüfterrad 3 dargestellt, wobei das Lüfterrad 3 wieder frei drehbar auf der Motorwelle gelagert ist. Aus der schematischen Zeichnung ist ersichtlich, daß etwa konzentrisch zum Außendurchmesser 10 der auf der Motorwelle 2 fest sitzenden magnetisierbaren Metallscheibe 5 am Lüfterrad 3 wenigstens ein abschnittsweise ringförmiger Permanentmagnet 6' gelenkig oder schwenkbar gelagert ist, der bei stehendem oder niedrigtourig über die magnetische Schlupfkupplung mit der Metallscheibe umlaufenden Lüfterrad in geringem Abstand 9' zum Außendurchmesser 10 der Metallscheibe 5 gehalten ist und ab einer bestimmten Motordrehzahl unter Einwirkung der Fliehkraft sich weiter von der Metallscheibe abhebt, so daß mit Vergrößerung des Luftspaltes 9' die Kraftübertragung der Schlupfkupplung reduzierbar ist.

In vorteilhafter Ausführung ist dabei vorgesehen, daß die Magnete 6' auf wenigstens einem bügelförmigen Trägersegment 11 des Lüfterrades 3 angeordnet und dem Außendurchmesser 10 der Metallscheibe 5 mit Abstand 9' zugewandt sind, wobei das Trägersegment 11 über eine Schwenkachse 12 oder ein Gelenk am Lüfterrad 3 befestigt ist und wobei das freie Ende 13 des Trägersegmentes gegen die Wirkung der Fliehkraft mittels einer Zugfeder 14 gegen einen Anschlag 15 des Lüfterrades mit einem Mindestabstand zur Metallscheibe gehalten wird. Mit 16 ist ein Haltestift des Lüfterrades für die Zugfeder 14 bezeichnet. Durch einen Anschlag 15' wird die mit einem Pfeil gekennzeichnete Abhebbewegung des Trägersegmentes 11 begrenzt.

## Patentansprüche

1. Elektrischer Antrieb für Schienenfahrzeuge und spurgebundene Fahrzeuge, mit einem Elektromotor (1) und wenigstens einem auf der Motorwelle (2) frei drehbar gelagerten Lüfterrad (3), **dadurch gekennzeichnet**, daß eine von der Motordrehzahl und der Fliehkraft abhängige Schlupfkupplung (4-12) zwischen der Motorwelle (2) und dem Lüfterrad (3) vorgesehen ist, wobei ab einer vorgebbaren Motordrehzahl die Wirkung der Schlupfkupplung bis zur Aufhebung der Kraftübertragung reduzierbar ist und wobei bei abfallender Motordrehzahl die Kraftübertragung der Schlupfkupplung wieder zunimmt.

2. Elektrischer Antrieb nach Anspruch 1, **dadurch gekennzeichnet**, daß die Schlupfkupplung eine auf der Motorwelle (2) fest sitzende Scheibe (5) aus magnetisierbarem Material, insbesondere Metall, umfaßt.

3. Elektrischer Antrieb nach Anspruch 1 und 2, **dadurch gekennzeichnet**, daß am Lüfterrad (3) wenigstens ein Permanentmagnet (6) angeordnet und dieser der Metallscheibe (5) unter Bildung eines Luftspaltes (9, 9') zugewandt ist.

4. Elektrischer Antrieb nach Anspruch 1 und 2, **dadurch gekennzeichnet**, daß am Lüfterrad wenigstens ein Elektromagnet angeordnet und dieser der magnetisierbaren Metallscheibe zugewandt ist.

5. Elektrischer Antrieb nach einem der Ansprüche 1 bis 4, **dadurch gekennzeichnet**, daß das Lüfterrad (3) wenigstens einen Mitnehmer (7) mit einem Tragelement (8) für den oder die Permanentmagnete (6) oder Elektromagnet(e) aufweist und wobei über den Mitnehmer oder das Tragelement der Abstand oder Luftspalt (9) der Permanentmagnete bzw. Elektromagnete von der Metallscheibe (5) unter der Einwirkung der Fliehkraft veränderbar ist.

6. Elektrischer Antrieb nach Anspruch 1, **dadurch gekennzeichnet**, daß die Motorwelle wenigstens einen fest sitzenden Permanentmagneten trägt, dem ein magnetisierbares Metallteil des Lüfterrades mit Abstand zugewandt ist, wobei dieses Metallteil gelenkig oder elastisch am Lüfterrad derart befestigt ist, daß dieser Abstand unter der Einwirkung der Fliehkraft veränderbar ist.

7. Elektrischer Antrieb nach einem der Ansprüche 1 bis 6, **dadurch gekennzeichnet**, daß etwa konzentrisch zum Außendurchmesser (10) der auf der Motorwelle (2) fest sitzenden, magnetisierbaren Metallscheibe (5) am Lüfterrad (3) wenigstens ein abschnittsweise ringförmiger Permanentmagnet (6') gelenkig oder schwenkbar gelagert ist, der bei stehendem oder niedrigtourig über die magnetische Schlupfkupplung mit der Metallscheibe umlaufenden Lüfterrad in geringem Abstand (9') zum Außendurchmesser der Metallscheibe gehalten ist und ab einer bestimmten Motordrehzahl unter Einwirkung der Fliehkraft sich weiter von der Metallscheibe abhebt, so daß die Kraftübertragung der Schlupfkupplung reduzierbar ist.

8. Elektrischer Antrieb nach Anspruch 7, **dadurch gekennzeichnet**, daß der oder die Permanentmagnet(e) (6') auf wenigstens einem bügelförmigen Trägersegment (11) des Lüfterrades (3) angeordnet und dem Außendurchmesser (10) der Metallscheibe (5) mit Abstand (9') zugewandt sind, daß das Trägersegment (11) über eine Schwenkachse (12) oder ein Gelenk am Lüfterrad (3) befestigt ist und daß das freie Ende (13) des Trägersegmentes gegen die Wirkung der Fliehkraft mittels einer Zugfeder (14) gegen einen Anschlag (15) des Lüfterrades mit einem Mindestabstand zur Metallscheibe gehalten wird.

9. Elektrischer Antrieb nach einem der Ansprüche 1 bis 8, **dadurch gekennzeichnet**, daß dem unter der Einwirkung der Fliehkraft gegen die Wirkung der Zugfeder (14) von der Scheibe (5) abhebbaren freien Ende (13) des Trägersegmentes (11) oder Mitnehmers (7) ein Anschlag (15') des Lüfterrades (3) zugeordnet ist.

## Claims

1. Electric drive for rail vehicles and trackbound vehicles, having an electric motor (1) and at least one fan wheel (3) which is mounted on the motor shaft (2) in a freely rotatable manner, characterised in that a slip clutch (4-12), dependent upon the motor speed and the centrifugal force, is provided between the motor shaft (2) and the fan wheel (3), wherein from a preselectable motor speed the effect of the slip clutch can be reduced until the power transmission is cancelled and wherein when the motor speed drops the power transmission of the slip clutch increases again.

2. Electric drive according to claim 1, characterised in that the slip clutch comprises a disc (5) of magnetizable material, in particular metal, sitting on the motor shaft (2) in a fixed manner.

3. Electric drive according to claim 1 and 2, characterised in that at least one permanent magnet (6) is arranged on the fan wheel (3) and said permanent magnet (6) faces the metal disc (5) forming an air gap (9, 9').

4. Electric drive according to claim 1 and 2, characterised in that at least one electromagnet is arranged on the fan wheel and said electromagnet faces the magnetizable metal disc.

5. Electric drive according to one of claims 1 to 4, characterised in that the fan wheel (3) has at least one driver (7) with a carrier element (8) for the permanent magnet or magnets (6) or electromagnet(s) and wherein the distance, or air gap (9), of the permanent magnets or electromagnets from the metal disc (5) can be changed by way of the driver or the carrier element under the influence of the centrifugal force.

6. Electric drive according to claim 1, characterised in that the motor shaft bears at least one permanent magnet which sits thereon in a fixed manner and facing which at a distance therefrom there is a magnetizable metal portion of the fan wheel, wherein this metal portion is secured to the fan wheel in an articulated or elastic manner in such a way that this distance can be changed under the influence of the centrifugal force.

7. Electric drive according to one of claims 1 to 6, characterised in that mounted on the fan wheel (3) in an articulated manner or so that it can be swung and so as to be substantially concentric with the outer diameter (10) of the magnetizable metal disc (5) sitting fixedly on the motor shaft (2) there is at least one sectionalized annular permanent magnet (6') which, when the fan wheel is stationary or rotating at a low speed by way of the magnetic slip clutch with the metal disc, is held at a short distance (9') from the outer diameter of the metal disc, and from a certain motor speed under the influence of the centrifugal force is lifted off further from the metal disc so that the power transmission of the slip clutch can be reduced.

8. Electric drive according to claim 7, characterised in that the permanent magnet or magnets (6') is/are arranged on at least one bow-shaped carrier segment (11) of the fan wheel (3) and face the outer diameter (10) of the metal disc (5) at a distance therefrom (9'), in that the carrier segment (11) is secured to the fan wheel (3) by way of a swing axle (12) or a joint and in that the free end (13) of the carrier segment is held against a stop (15) of the fan wheel at a minimum distance from the metal disc by means of a tension spring (14) in opposition to the effect of the centrifugal force.

9. Electric drive according to one of claims 1 to 8, characterised in that a stop (15') of the fan wheel (3) is associated with the free end (13) of the carrier segment (11) or driver (7) that can be lifted off from the disc (5) under the influence of the centrifugal force in opposition to the effect of the tension spring (14).

## Revendications

1. Dispositif d'entraînement électrique pour véhicule sur rails et véhicule guidé, comportant un moteur (1) électrique et au moins une roue (3) de ventilateur montée folle sur l'arbre (2) du moteur, caractérisé en ce qu'un accouplement (4 à 12) à induction, dépendant du régime du moteur et de la force centrifuge, est monté entre l'arbre (2) du moteur et la roue (3) de ventilateur, l'effet de l'accouplement à induction pouvant, à partir d'un régime du moteur pouvant être prescrit, être réduit jusqu'à la suppression de la transmission de force, et la transmission de force de l'accouplement à induction augmentant à nouveau lorsque le régime du moteur décroît.

2. Dispositif d'entraînement électrique suivant la revendication 1, caractérisé en ce que l'accouplement à induction comprend un disque (5) en matériau pouvant être aimanté, notamment en métal, monté en siège fixe sur l'arbre (2) du moteur.

3. Dispositif d'entraînement électrique suivant la revendication 1 et 2, caractérisé en ce qu'il est monté au moins un aimant (6) permanent sur la roue (3) de ventilateur et en ce que cet aimant est tourné vers le disque (5) métallique, avec formation d'un entrefer (9, 9').

4. Dispositif d'entraînement électrique suivant la revendication 1 et 2, caractérisé en ce qu'il est monté au moins un électro-aimant sur la roue de ventilateur et en ce que cet électro-aimant est tourné vers le disque métallique pouvant être aimanté.

5. Dispositif d'entraînement électrique suivant l'une des revendications 1 à 4, caractérisé en ce que la roue (3) de ventilateur comprend au moins un toc (7) d'entraînement ayant un élément (8) de support pour l'aimant (6) permanent ou les aimants (6) permanents ou pour un électro-aimant ou des électro-aimants, et l'intervalle ou l'entrefer (9) entre les aimants permanents ou les électro-aimants et le disque (5) métallique pouvant être modifié par l'intermédiaire du toc d'entraînement ou de l'élément de support, sous l'effet de la force centrifuge.

6. Dispositif d'entraînement électrique suivant la revendication 1, caractérisé en ce que l'arbre du moteur porte au moins un aimant permanent à siège fixe, vers lequel est tournée, à distance, une pièce métallique, pouvant être aimantée, de la roue de ventilateur, cette pièce métallique étant articulée ou fixée élastiquement à la roue de ventilateur de telle manière que cette distance peut être modifiée sous l'effet de la force centrifuge.

7. Dispositif d'entraînement électrique suivant l'une des revendications 1 à 6, caractérisé en ce qu'il est monté de manière articulée ou basculante, à peu près concentriquement au diamètre (10) extérieur du disque (5) métallique, monté à siège fixe sur l'arbre (2) du moteur et pouvant être aimanté, sur la roue (3) de ventilateur, au moins un aimant (6') permanent à tronçon annulaire, qui, lorsque la roue de ventilateur est à l'arrêt ou tourne à bas régime par le disque métallique, par l'intermédiaire de l'accouplement magnétique à induction, est maintenu à petite distance (9') par rapport au diamètre extérieur du disque métallique et se soulève encore du disque métallique à partir d'un régime déterminé du moteur, sous l'effet de la force centrifuge, si bien que la transmission de force de l'accouplement à induction peut être réduite.

8. Dispositif d'entraînement électrique suivant la revendication 7, caractérisé en ce que l'aimant (6') permanent ou les aimants (6') permanents sont montés sur au moins un segment (11) de support en forme d'étrier de la roue (3) de ventilateur et sont tournés, à distance (9'), vers le diamètre (10) extérieur du disque (5) métallique, en ce que le segment (11) de support est fixé à la roue (3) de ventilateur par l'intermédiaire d'un axe (12) pivotant ou d'une articulation et en ce que l'extrémité (13) libre du segment de support est maintenue, à l'encontre de l'effet de la force centrifuge, au moyen d'un ressort (14) de traction, contre une butée (15) de la roue de ventilateur, en ayant une distance minimum par rapport au disque métallique.

9. Dispositif d'entraînement électrique suivant l'une des revendications 1 à 8, caractérisé en ce qu'une butée (15') de la roue (3) de ventilateur est associée à l'extrémité (13) libre, pouvant, sous l'effet de la force centrifuge, être soulevée du disque (5) à l'encontre de l'effet du ressort (14) de traction, du segment (11) de support ou du toc (7) d'entraînement.
